# EUROPÄISCHE PATENTSCHRIFT

(11) **EP 3 239 668 B1**
(45) Veröffentlichungstag und Bekanntmachung des Hinweises auf die Patenterteilung: **05.09.2018**
(21) Anmeldenummer: 17162710.2
(22) Anmeldetag: 24.03.2017
(51) Int. Cl.: G01J 3/02, G01J 3/08, G08C 15/06

(54) **MESSANORDNUNG ZUR ORTSVERTEILTEN ERFASSUNG VON SPEKTREN**
MEASURING ASSEMBLY FOR DISTRIBUTED DETECTION OF SPECTRA
SYSTÈME DE MESURE DESTINÉ À LA DÉTECTION LOCALE DE SPECTRES

(30) Priorität: 30.03.2016 DE 102016105800
(43) Veröffentlichungstag der Anmeldung: 01.11.2017
(73) Patentinhaber: NIR-Online GmbH, 69190 Walldorf (DE)
(72) Erfinder: Qvarfort, Tomas, 69168 Wiesloch (DE); Eckert, Michael, 69207 Sandhausen (DE)
(74) Vertreter: Geitz Truckenmüller Lucht Christ

(56) Entgegenhaltungen:
- WO-A1-2006/003551
- DE-T2- 60 003 186
- US-A- 4 888 714
- US-A1- 2002 039 186

## Beschreibung

Die vorliegende Erfindung betrifft eine Messanordnung zur ortsverteilten Erfassung von Spektren, umfassend ein Spektrometer mit einem Spektroskop, eine Prozesssteuerung und wenigstens zwei von dem Spektrometer entfernt angeordnete Messköpfe, die jeweils eine Lichtquelle, ein verschließbares Beobachtungsfenster und eine Einkopplungsstelle aufweisen, wobei bei geöffnetem Beobachtungsfenster von der Lichtquelle emittiertes und von einem Produktstrom reflektiertes Licht auf die Einkopplungsstelle trifft, und Lichtwellenleiter, die den Ausgang des jeweiligen Messkopfes mit dem Spektrometer verbinden. Eine derartige Messanordnung ist bereits aus der WO 2006/003551 A1 vorbekannt. Ebenfalls ergeben sich aus den Dokumenten DE 600 03 186 T2 und US 2002/0039186 A1 sowie US 4,888,714 A weitere grundsätzlich ähnliche Messanordnungen dieser Art.

Eine weitere Messanordnung ist aus der DE 10 2011 054 841 A1 vorbekannt. Dort ist eine Erntemaschine beschrieben, mit deren Hilfe im laufenden Betrieb eine Untersuchung des Erntegutstroms unter Verwendung eines NIR-Spektroskops erfolgt. In der Gesamtanordnung ist ein einzelnes derartiges NIR-Spektroskop vorgesehen, welches mit verteilt über die Anordnung auf den Erntegutstrom gerichteten Messköpfen eine Mehrzahl von Spektren erfasst, wobei jedoch jeder einzelne Messkopf mit einem eigenen Lichtwellenleiter direkt mit dem Spektroskop verbunden ist. Mithilfe eines Multiplexers werden die mehreren Messköpfe reihum abgefragt. Hierzu schaltet der Multiplexer die Signale der einzelnen Lichtwellenleiter nacheinander auf ein dem Spektrometer zugeordneten Spektroskop, welches durch Spektralzerlegung ein Spektrum zu dem Lichtsignal des jeweils aufgeschalteten Lichtwellenleiters erstellt.

Nachdem sich bei der im Stand der Technik beschriebenen Erntemaschine um eine sehr überschaubare Anordnung handelt, welche zudem eine zentrale Anordnung des Spektroskops erlaubt, ist es hierbei unproblematisch möglich, für jeden einzelnen Messkopf einem Lichtwellenleiter zu dem Spektroskop heranzuführen.

Häufig werden jedoch derartige Anordnungen auch in wesentlich größeren, insbesondere industriellen Anlagen eingesetzt, bei welchen zwischen den einzelnen Messköpfen und einem zentralen Spektroskop eine größere Wegstrecke liegt. Verteilt über derartige Anlagen angeordnete Messköpfe erfordern daher gemäß der Lösung im Stand der Technik enorme Investitionen in die relativ teuren Lichtwellenleiter, die in den bekannten Anordnungen ein sternförmiges Netz ausbilden.

In der CN 103308148 A wird vorgeschlagen, mehrere Messköpfe durch Verwendung von optischen Multiplexern in Reihe zu schalten, wodurch nur noch ein Lichtwellenleiter benötigt wird.

Als Lichtwellenleiter werden Glasfaserkabel eingesetzt, die sich besonders für die Übertragung von Lichtsignalen und damit auch zur Auswertung von Spektren eignen, die jedoch aufgrund der relativ hohen Herstellungskosten nicht unbegrenzt zur Verfügung stehen.

Vor diesem Hintergrund liegt der vorliegenden Erfindung die Aufgabe zu Grunde, eine Messanordnung zur ortsverteilten Erfassung von Spektren zu schaffen, welche insbesondere bei größeren industriellen Anlagen deutlichen Kosteneinsparungen gegenüber dem Stand der Technik führt und vielseitiger einsetzbar ist.

Dies gelingt durch eine Messanordnung zur ortsverteilten Erfassung von Spektren gemäß den Merkmalen des Anspruchs 1. Ferner gelingt dies auch durch eine Messanordnung gemäß den Merkmalen des neben geordneten Anspruchs 7. Weitere sinnvolle Ausgestaltungen können den Unteransprüchen entnommen werden.

Erfindungsgemäß sind für die Lösung der Aufgabe zwei wesentliche Effekte maßgeblich. Zum einen sieht die Erfindung vor, dass mehrere Messköpfe in einer Reihenschaltung hintereinander angeordnet werden können, wozu die Erfindung eine besondere Ausgestaltung der Messköpfe vorschlägt. Zum anderen arbeitet die Erfindung bevorzugtermaßen mit einer Koordinierung des Übertragungsverhaltens der einzelnen Messköpfe, wozu eine Datenübertragung zwischen den Messköpfen erforderlich ist. Mit einigem Vorteil sieht die Erfindung vor, diese Datenübertragung neben der reinen Übertragung der Spektren Informationen ebenfalls über die Lichtwellenleiter umzusetzen.

Beide Aspekte dieser Erfindung können alternativ oder kumulativ eingesetzt werden und führen zu den gewünschten Verbesserungen.

Zunächst einmal umfassen die Messköpfe eine Lichtquelle, welche Licht in Richtung eines Beobachtungsfensters emittiert. Mit einigem Vorteil handelte sich hierbei um Licht im Nahinfrarotbereich, welches sich für eine NIR-Spektroskopie eignet. Das Licht fällt durch das Beobachtungsfenster hindurch und wird von dem hinter dem Beobachtungsfenster wobei ziehenden Produktstrom reflektiert. Das reflektierte Licht trifft auf eine Einkopplungsstelle, welche den Beginn der Lichtleiterübertragung darstellt. Die Erfindung sieht nun vor, dass hinter der Einkopplungsstelle ein Multiplexer angeordnet ist, welcher ein Ausgangssignal eines weiter hinten in Reihe geschalteten zweiten Messkopfes auf eine gemeinsame Ausgangsleistung aufschaltet und hierdurch eine solche Reihenschaltung erst ermöglicht. Ferner weist sowohl jeder Messkopf als auch das Spektrometer jeweils eine Datenkommunikationseinheit auf, über welche Steuersignale übertragen werden. Eine bedarfsweise dem Spektrometer zugeordnete Prozesssteuerung überträgt auf diese Weise Steuerbefehle an die Messköpfe, um festzulegen, welches der verschließbaren Beobachtungsfenster im Einzelnen mit einer Blende verschlossen werden soll. Durch das Verschließen eines Beobachtungsfensters mit einer Blende, bei der es sich um ein optisches Reflexions-Referenzmaterial handelt, stellt sich an der betroffenen Einkopplungsstelle ein Einheitssignal ein, welches bei dem Spektrometer bekannt ist und aus der Übertragung herausgerechnet werden kann. Aufgrund der zentralen Steuerung der Verschlussblenden, der so genannten Shutter, wird von der Prozesssteuerung festgelegt, welcher Messkopf gerade ein Bild überträgt, so dass die Prozesssteuerung auch ohne eine eigene Leitung für jeden einzelnen Messkopf weiß, welches Spektrum an welcher Stelle gerade ausgewertet wird.

Auf diese Art und Weise ist es möglich, mehrere Messköpfe in einer Kette hintereinander zu schalten, ohne dass aufgrund der zunehmenden Entfernung von dem Spektrometer große Mengen an Lichtwellenleitern benötigt werden, da ein einziger durchgehender und nur in den Messköpfen unterbrochener Strang aus mehreren Lichtwellenleitern zur Verbindung mehrerer Messköpfe mit dem Spektrometer ausreicht.

In sinnvoller Weiterbildung der Erfindung werden die Signale des Ausgangs eines zweiten Messkopfes und die Signale der Einkopplungsstelle des ersten Messkopfes gleichwertig auf den Ausgang des ersten Messkopfes aufgeschaltet, so dass bei einer Verwendung weniger in Reihe geschalteter Messköpfe nur eine geringe Dämpfung anfällt und diese erst bei weiter entfernt liegenden Messköpfen zunimmt. Zwar bedeutet jede Unterbrechung eines Lichtleiters in Form einer Kopplung eine Dämpfung des Signals, jedoch kann eine einwandfreie Übertragung aber mit einem deutlich gedämmten Signal erfolgreich durchgeführt werden. Eine Kettenschaltung von einigen Messköpfen ist daher ohne weiteres möglich.

Eine gleichwertige Aufschaltung des Ausgangssignals des zweiten Messkopfes und des Ausgangssignals der Einkopplungsstelle des ersten Messkopfes kann auf verschiedene Art und Weise erfolgen. So ist zunächst eine Verteilung der einzelnen Phasen des Lichtwellenleiters auf die verschiedenen Einkopplungsstellen möglich, so dass beispielsweise dem Ausgangssignal des zweiten Messkopfes ein erstes Faserbündel zugeordnet wird, während für das Ausgangssignal der Einkopplungsstelle des ersten Messkopfes ein zweites Faserbündel zur Verfügung steht. Alternativ ist es aber auch möglich, beide Signale über einen optischen Kombinierer als Ganzes auf sämtliche Phasen des Lichtwellenleiters aufzuschalten.

Die Datenverbindung zwischen den Messköpfen und dem Spektrometer, welche über die Datenkommunikationseinheiten erfolgt, können entweder drahtgebunden oder per Funk hergestellt sein. Allerdings sieht die Erfindung auch eine besonders bevorzugte Ausgestaltung vor, welche im Folgenden beschrieben wird.

Bevorzugtermaßen weisen die Datenkommunikationseinheiten sowohl der Messköpfe als auch des Spektrometers optische Eingänge und Ausgänge auf, über welche die Datenkommunikationseinheiten unter Verwendung von Lichtsignalen kommunizieren können. Hierzu können zusätzlich die Datenkommunikationseinheiten auf Lichtwellenleiter aufgeschaltet werden, so dass hierfür keine separate Leitung vorgesehen werden muss. Während in den Messköpfen anstelle eines 2:1-Multiplexers ein 3:1-Multiplexer eingesetzt werden kann, dessen dritter Eingang mit der Datenkommunikationseinheit des Messkopfes verbunden werden kann, wird bei dieser Ausgestaltung bei dem Spektrometer ein 1:2-Demultiplexer verwendet, welcher das eingehende Signal einerseits auf das Spektroskop und andererseits auf die Datenkommunikationseinheit verteilt. In diesem Fall arbeitet der Multiplexer in Gegenrichtung auch als Demultiplexer und umgekehrt.

In bevorzugter Ausgestaltung weist die Gesamtanordnung, vorzugsweise im Bereich des Spektrometers, eine Prozesssteuerung auf, die mit der Datenkommunikationseinheit des Spektrometers verbunden ist. Über diese Datenkommunikationseinheit des Spektrometers erhält die Prozesssteuerung Zustandsmitteilungen von den Datenkommunikationseinheiten der Messköpfe und kann diesen Steuerbefehle übermitteln. Auf diese Art und Weise wird die gesamte Prozesssteuerung zentral in dem Bereich des Spektrometers durchgeführt, so dass die eintreffenden Lichtsignale im Sinne der erteilten Steuerbefehle ausgewertet werden können.

Ergänzend zu dem reinen Demultiplexer am Eingang des Spektrometers kann diesem zusätzlich ein Multiplexer zugeordnet sein, welcher es ermöglicht, mehr als eine Reihenschaltung von Messköpfen mit dem Spektrometer zu verbinden. Auf diese Art und Weise können Ketten von Messköpfen in mehrere Richtungen gleichzeitig ausgelegt werden, um den überwachten Bereich im Einzugsbereich eines einzelnen Spektrometers weiter zu vergrößern und die Effizienz des eingesetzten Materials weiter zu verbessern. Ebenfalls ist es ferner möglich, in den Messköpfen auch höherwertige Multiplexer als 3:1-Multiplexer einzusetzen, um hinter einem Messkopf eine Verzweigung zu schaffen. Wesentlich ist hierbei lediglich, dass die Topologie des aufgebauten Netzes bei der Prozesssteuerung bekannt ist und die Ansteuerung entsprechend erfolgt.

Der direkt dem Spektrometer zugeordnete Multiplexer kann in konkreter Ausgestaltung einen Eingang für einen baueinheitlich mit dem Spektrometer ausgeführten Messkopf bereithalten, so dass auch direkt bei dem Spektrometer eine Spektrenerfassung durchgeführt werden kann.

Mit einigem Vorteil wird dann dieser Eingang des Multiplexers nicht auf beide Ausgänge des Demultiplexers geschaltet, da die Datenkommunikation mit dem baueinheitlich mit dem Spektrometer ausgeführten Messkopf auf direktem Weg erfolgen kann, eine Einkopplung des Signals der Einkopplungsstelle des mit dem Spektrometer baueinheitlich ausgeführten Messkopfes auf die Datenkommunikationseinheit des Spektrometers also nicht erforderlich ist. Daher sind nur diejenigen Eingänge des Multiplexers des Spektrometers, welche mit entfernt angeordneten Messköpfen verbunden sind, über den Demultiplexer des Spektrometers mit der Datenkommunikationseinheit des Spektrometers und dem Spektroskop verbunden, während der Eingang des Multiplexers des Spektrometers, welcher mit dem baueinheitlich dem Spektrometer zugeordneten Messkopf verbunden ist, ausschließlich mit dem Spektroskop verbunden ist.

Die vorstehend beschriebene Erfindung wird im Folgenden anhand eines Ausführungsbeispiels näher erläutert.

Es zeigen
- Figur 1: eine Messanordnung, bestehend aus einem Spektrometer und wenigstens zwei in Reihen geschalteten Messköpfen, in einem Prinzipschaltbild,
- Figur 2: die Messanordnung gemäß Figur 1, wobei die Datenkommunikation über die Lichtwellenleiter läuft, in einem Prinzipschaltbild, sowie
- Figur 3: eine Messanordnung, bestehend aus einem Spektrometer mit baueinheitlich verbundenem Messkopf und drei Reihen von Messköpfen, ebenfalls in einem Prinzipschaltbild.

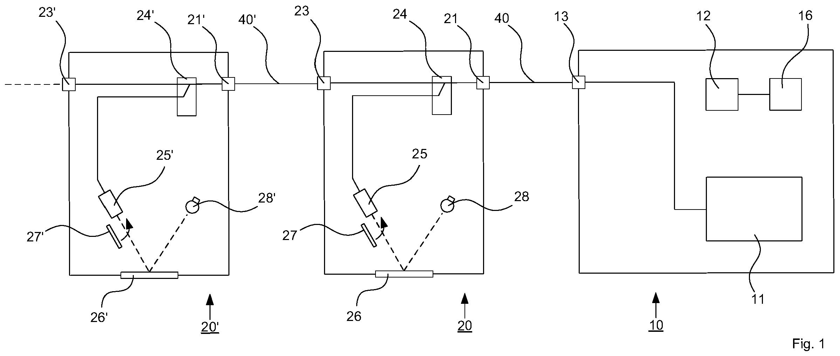

Figur 1 zeigt in einem Prinzipschaltbild ein Spektrometer 10, welches ein Spektroskop 11 zur Auswertung angelieferter Spektren, sowie eine Datenkommunikationseinheit 12 und eine mit dieser datenverbundene Prozesssteuerung 16 umfasst. Über einen Eingang 13 ist eine Reihenschaltung von wenigstens zwei Messköpfen 20, 20' mit dem Spektrometer 10 verbunden, welche an von dem Spektrometer 10 entfernt gelegenen Orten aufgestellt sind um dort an den jeweiligen Produktströmen einer Produktionsanlage Daten zu erfassen und an das Spektrometer 10 zu übermitteln. Hierzu ist zunächst der Messkopf 20 über einen Lichtwellenleiter 40 mit dem Eingang 13 des Spektrometers 10 verbunden. Der Lichtwellenleiter 40 wird von einem Ausgang 21 des Messkopfes 20 gespeist, an dem ein Multiplexer 24 angeschlossen ist. Dieser schaltet eines von zwei möglichen Signalen auf den Ausgang 21 des Messkopfes 20, nämlich entweder ein Signal einer Einkopplungsstelle 25 des Messkopfes 20 oder ein Signal von einem weiter hinten liegenden Messkopf 20'.

Die Signalgenerierung erfolgt über eine Lichtquelle 28, welche auf ein Beobachtungsfenster 26 ausgerichtet ist. Das emittierte und von dem hinter dem Beobachtungsfenster 26 liegenden Produktstrom zurückgeworfene NIR-Licht trifft auf die Einkopplungsstelle 25 und wird dem Spektroskop 11 des Spektrometers 10 zugeführt. Die Messköpfe 20, 20' weisen eine hier nicht dargestellte Datenkommunikationseinheit auf, welche mit der Datenkommunikationseinheit 12 des Spektrometers 10 datenverbunden ist. Dies kann durch eine Drahtverbindung oder über Funk erfolgen. Über diese Datenverbindung gibt die Prozesssteuerung 16 des Spektrometers 10 Stellbefehle weiter, insbesondere an einen Shutter 27, welcher den Lichtweg zu der Einkopplungsstelle 25 verlegen kann. Die Prozesssteuerung 16 wählt aus, von welchem der Messköpfe 20, 20' Signale empfangen werden sollen und gibt dann über die jeweiligen Datenkommunikationseinheiten Stellsignale für die Shutter 27, 27' und wählt somit aus, an welcher der Einkopplungsstellen 25, 25' die Reflexion von dem Produktstrom eingekoppelt wird. Diejenigen Einkopplungsstellen 25, 25', bei welchem der Shutter 27, 27' in eine Verschlussstellung gebracht ist, senden nur ein neutrales Signal, welches am Ende der Übertragungsstrecke beim Spektrometer 10 herausgerechnet werden kann. Jeweils lediglich ein Shutter 27, 27' ist zu einem definierten Zeitpunkt in einer offenen Stellung, so dass das Spektrometer 10 und seine Prozesssteuerung 16 stets genau wissen, von welchem Messkopf 20, 20' die abgelesenen Messsignale stammen.

Der Messkopf 20' ist seinerseits mithilfe eines Lichtwellenleiters 40' mit dem Eingang 23 des Messkopfes 20 verbunden und weist seinerseits einen Eingang 23' auf, an den in Reihe ein weiterer Messkopf angeschlossen werden könnte. Im Übrigen sind die verwendeten Messköpfe identisch.

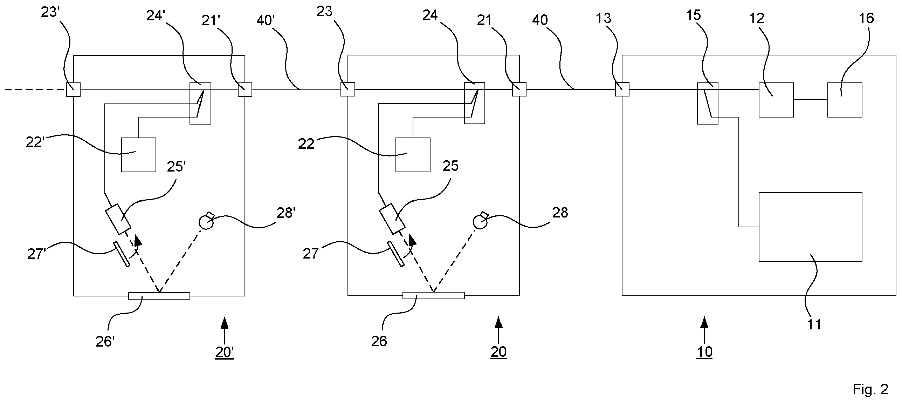

Figur 2 erweitert das vorangegangene Prinzipschaltbild dahingehend, dass nunmehr in den Messköpfen 20, 20' jeweils eine Datenkommunikationseinheit 22, 22' gezeigt ist, welche ebenfalls mit den jeweiligen Multiplexer 24, 24' verbunden ist. Ebenfalls ist nunmehr die Datenkommunikationseinheit 12 des Spektrometers 10 über einen Demultiplexer 15 mit dem Eingang 13 verbunden, so dass die eingehenden Signale sowohl auf die Datenkommunikationseinheit 12 als auch auf das Spektroskop 11 verteilt werden. Dies erspart zusätzliche Kommunikationsmittel zur Kommunikation zwischen der Datenkommunikationseinheit 12 und den entfernt liegenden Datenkommunikationseinheiten 22, 22'. Während die Signalstärken sowohl des jeweils in einem Messkopf 20, 20' ankommenden Signals als auch des eigenen Signals der Einkopplungsstelle 25, 25' vorzugsweise gleichwertig eingekoppelt werden, werden die Steuerdaten der Datenkommunikationseinheiten 22, 22' deutlich geringerwertig, etwa lediglich mit 5 % Signalstärke, auf den Lichtwellenleiter 40 bzw. 40' gegeben. Für eine Datenkommunikation und zur Übertragung der Stellbefehle ist dies jedoch ausreichend.

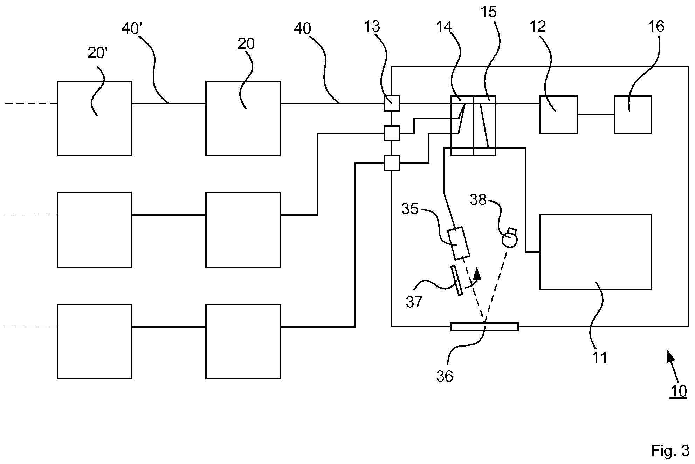

Figur 3 zeigt ein Spektrometer 10, bei dem dem Demultiplexer 15 zusätzlich ein Multiplexer 14 zugeordnet ist, welcher nunmehr neben dem Eingang 13 zwei weitere Eingänge aufschalten kann. Ferner ist dem Spektrometer 10 baueinheitlich ein weiterer Messkopf zugeordnet, welcher aus einer Einkopplungsstelle 35, einer zugehörigen Lichtquelle 38, einem Shutter 37 und einem Beobachtungsfenster 36 gebildet ist. Hierbei wird jedoch das Signal der Einkopplungsstelle 35 hinsichtlich des Demultiplexers 15 anders behandelt als die anderen ankommenden Signale, das Signal der Einkopplungsstelle 35 wird nicht der Datenkommunikationseinheit 12 zur Verfügung gestellt, sondern vielmehr direkt auf das Spektroskop 11 geschaltet. Dies deshalb, weil eine Steuerung des Shutters 37 direkt an der Prozesssteuerung 16 erfolgen kann, ohne dass hierfür Steuersignale über die Datenkommunikationseinheit 12 nach außen gegeben werden müssen.

Ebenso wie am Eingang 13 ein Lichtwellenleiter 40, daran wiederum ein Messkopf 20, ein weiterer Lichtwellenleiter 40' und ein zweiter Messkopf 20' angeschlossen sind, kann eine entsprechende Reihenschaltung ebenfalls an den weiteren, hinzugekommenen Eingängen des Spektrometers 10 angeschlossen werden, so dass durch diese Ausgestaltungsform die Möglichkeiten der Verwendung des Spektrometers 10 im Rahmen der gesamten Messanordnung erweitert werden. Auf diese Weise kann das Spektrometer 10 nicht nur am Ende einer Kette aufgestellt werden, sondern auch in der Mitte zwischen zwei oder drei Reihenschaltungen von Messköpfen angeordnet sein.

Vorstehend beschrieben ist somit eine Messanordnung zur ortsverteilten Erfassung von Spektren, durch welche eine Reihenschaltung von Messköpfen über Lichtwellenleiterkabel ermöglicht wird, mit dem Effekt, dass eine einzelne Aufschaltung von Messköpfen an dem Spektrometer und damit ein großer Aufwand an Lichtwellenleitern entfallen kann. Darüber hinaus ermöglicht eine derartige Lösung eine äußerst flexible Anordnung von Messköpfen an einer mit einem Spektroskop zu überwachenden Produktionsstätte.

### BEZUGSZEICHENLISTE

- 10: Spektrometer
- 11: Spektroskop
- 12: Datenkommunikationseinheit
- 13: Eingang
- 14: Multiplexer
- 15: Demultiplexer
- 16: Prozesssteuerung
- 20, 20': Messkopf
- 21, 21': Ausgang
- 22, 22': Datenkommunikationseinheit
- 23, 23': Eingang
- 24, 24': Multiplexer
- 25, 25': Einkopplungsstelle
- 26, 26': Beobachtungsfenster
- 27, 27': Shutter
- 28, 28': Lichtquelle
- 35: Einkopplungsstelle
- 36: Beobachtungsfenster
- 37: Shutter
- 38: Lichtquelle
- 40, 40': Lichtwellenleiter

## Patentansprüche

1. Messanordnung zur ortsverteilten Erfassung von Spektren, umfassend ein Spektrometer (10) mit einem Spektroskop (11), eine Prozesssteuerung (16) und wenigstens zwei von dem Spektrometer (10) entfernt angeordnete Messköpfe (20, 20'), die jeweils eine Lichtquelle (28, 28'), ein verschließbares Beobachtungsfenster (26, 26') und eine Einkopplungsstelle (25, 25') aufweisen, wobei bei geöffnetem Beobachtungsfenster (26, 26') von der Lichtquelle (28, 28') emittiertes und von einem Produktstrom reflektiertes Licht auf die Einkopplungsstelle (25, 25')trifft, und Lichtwellenleiter (40, 40'), die den Ausgang des jeweiligen Messkopfes (20, 20') mit dem Spektrometer (10) verbinden,
**dadurch gekennzeichnet, dass** die Messköpfe in einer Reihenschaltung hintereinander angeordnet sind, wobei zwischen dem Ausgang (21) und der Einkopplungsstelle (25) eines ersten Messkopfes (20) ein optischer Multiplexer (24) angeordnet ist, welcher eingangsseitig mit der Einkopplungsstelle (25) des ersten Messkopfes (20) und über einen Eingang (23) des ersten Messkopfes (20) mittels Lichtwellenleiter (40') dem Ausgang (21') eines zweiten Messkopfes (20') verbunden ist und deren beider Signale auf den Ausgang (21) des ersten Messkopfes (20) aufschaltet, den Messköpfen (20, 20') und dem Spektrometer (10) jeweils eine Datenkommunikationseinheit (12, 22, 22') mit optischen Ein- und Ausgängen zugeordnet ist zur Übertragung von Steuersignalen, wobei die Prozesssteuerung (16) über die Datenkommunikationseinheiten (12, 22, 22') vom Spektrometer (10) Steuerbefehle an die Messköpfe überträgt, welches der verschließbaren Beobachtungsfenster (26, 26') im einzelnen mit einer Blende verschlossen werden soll, der zweite Messkopf (20') einen optischen Multiplexer (24') aufweist, den optischen Multiplexern (24, 24') der Messköpfe (20, 20') eingangsseitig zusätzlich Signale der optischen Ausgänge ihrer Datenkommunikationseinheiten (22, 22') aufgeschaltet werden, und dem Spektrometer (10) an einem optischen Eingang (13) ein optischer Demultiplexer (15) zugeordnet ist, welcher mit dem Spektroskop (11) des Spektrometers (10) und der Datenkommunikationseinheit (12) des Spektrometers (10) verbunden ist, um eingehende Signale sowohl auf die Datenkommunikationseinheit (12) als auch auf das Spektroskop (11) zu verteilen, und die Prozesssteuerung (16) nur jeweils ein Beobachtungsfenster (26, 26') in den Messköpfen (20, 20') zu einem definierten Zeitpunkt öffnet, wobei die neutralen Signale der Messköpfe (20, 20') mit nicht verschlossenem Beobachtungsfenster (26, 26') beim Spektrometer (10) herausgerechnet werden.

2. Messanordnung gemäß Anspruch 1, **dadurch gekennzeichnet, dass** dem Spektrometer (10) eingangsseitig ein optischer Multiplexer (14) mit mehreren Eingängen (13) zugeordnet ist, welcher die parallele Direktverbindung mehrerer Messköpfe (20, 20') am Spektrometer (10) erlaubt.

3. Messanordnung gemäß Anspruch 2, **dadurch gekennzeichnet, dass** dem Spektrometer (10) ein zusätzlicher Messkopf baueinheitlich zugeordnet ist, welcher mit einem der Eingänge des optischen Multiplexers (14) des Spektrometers (10) verbunden ist.

4. Messanordnung gemäß Anspruch 3, **dadurch gekennzeichnet, dass** nur diejenigen Eingänge des Multiplexers (14) des Spektrometers (10), welche mit entfernt angeordneten Messköpfen (20, 20') verbunden sind, über den Demultiplexer (15) des Spektrometers (10) mit der Datenkommunikationseinheit (12) des Spektrometers (10) und dem Spektroskop (11) verbunden sind, während der Eingang des Multiplexers (14) des Spektrometers (10), welcher mit dem baueinheitlich dem Spektrometer (10) zugeordneten Messkopf verbunden ist, nur mit dem Spektroskop (11) verbunden ist.

## Claims

1. Measuring assembly for the distributed acquisition of spectra, comprising a spectrometer (10) with a spectroscope (11), a process controller (16) and at least two measuring heads (20, 20') arranged remote from the spectrometer (10), each of which has a light source (28, 28'), a closable observation window (26, 26') and an injection point (25, 25'), wherein, with the observation window (26, 26') open, light emitted from the light source (28, 28') and reflected by a product flow impinges on the injection point (25, 25'), and optical waveguides (40, 40') which connect the output of the respective measuring head (20, 20') to the spectrometer (10), **characterized in that** the measuring heads are arranged in a series connection in succession, wherein between the output (21) and the injection point (25) of a first measuring head (20) an optical multiplexer (24) is arranged, which on the input side is connected to the injection point (25) of the first measuring head (20) and by means of optical waveguides (40') to the output (21') of a second measuring head (20') via an input (23) of the first measuring head (20) and impresses both their respective signals to the output (21) of the first measuring head (20), the measuring heads (20, 20') and the spectrometer (10) are each assigned a data communication unit (12, 22, 22') with optical inputs and outputs for the transmission of control signals, wherein the process controller (16) transmits control commands to the measuring heads via the data communication units (12, 22, 22') from the spectrometer (10) to determine which of the closeable observation windows (26, 26') is to be closed individually with a diaphragm, the second measuring head (20') comprises an optical multiplexer (24'), the optical multiplexers (24, 24') of the measuring heads (20, 20') on the input side are impressed with additional signals of the optical outputs of their data communication units (22, 22'), and the spectrometer (10) is associated at an optical input (13) with an optical demultiplexer (15), which is connected to the spectroscope (11) of the spectrometer (10) and to the data communication unit (12) of the spectrometer (10) to distribute incoming signals to both the data communication unit (12) as well as to the spectroscope (11), and the process controller (16) only opens one observation window (26, 26') in the measuring heads (20, 20') at a defined time, wherein the neutral signals of the measuring heads (20, 20') with non-closed observation windows (26, 26') in the spectrometer (10) are extracted by calculation.

2. Measuring assembly according to claim 1, **characterized in that** the spectrometer (10) is associated on the input side with an optical multiplexer (14) with a plurality of inputs (13), which allows the parallel direct connection of multiple measuring heads (20, 20') on the spectrometer (10).

3. Measuring assembly according to claim 2, **characterized in that** the spectrometer (10) is associated in a modularly integrated manner with an additional measuring head, which is connected to one of the inputs of the optical multiplexer (14) of the spectrometer (10).

4. Measuring assembly according to claim 3, **characterized in that** only those inputs of the multiplexer (14) of the spectrometer (10), which are connected to remotely arranged measuring heads (20, 20'), are connected via the demultiplexer (15) of the spectrometer (10) to the data communication unit (12) of the spectrometer (10) and the spectroscope (11), while the input of the multiplexer (14) of the spectrometer (10), which is connected to the measuring head that is associated in a modularly integrated manner with the spectrometer (10), is only connected to the spectroscope (11).

## Revendications

1. Dispositif de mesure pour l'acquisition de spectres en répartition spatiale, comprenant un spectromètre (10) muni d'un spectroscope (11), une commande de processus (16) et au moins deux têtes de mesure (20, 20') disposées à distance du spectromètre (10), dont chacune comprend une source lumineuse (28, 28'), une fenêtre d'observation occultable (26, 26') et un point d'entrée (25, 25'), la lumière émise par la source lumineuse (28, 28') et réfléchie par un flux de produits atteignant le point d'entrée (25, 25') quand la fenêtre d'observation (26, 26') est ouverte, et des guides d'ondes lumineuses (40, 40') qui connectent la sortie de chaque tête de mesure (20, 20') au spectromètre (10),
**caractérisé en ce que** les têtes de mesure sont montées en série les unes à la suite des autres, un multiplexeur optique (24) étant disposé entre la sortie (21) et le point d'entrée (25) d'une première tête de mesure (20) et étant connecté du côté de l'entrée avec le point d'entrée (25) de la première tête de mesure (20) et par une entrée (23) de la première tête de mesure (20), au moyen de guides d'ondes lumineuses (40'), à la sortie (21') d'une deuxième tête de mesure (20') et leurs deux signaux sont connectés à la sortie (21) de la première tête de mesure (20), une unité de communication de données (12, 22, 22') avec des entrées et des sorties optiques est associée à chacune des têtes de mesure (20, 20') et au spectromètre (10) en vue de la transmission de signaux de commande, la commande de processus (16) transmettant aux têtes de mesure, via les unités de communication de données (12, 22, 22') du spectromètre (10), des ordres indiquant précisément laquelle des fenêtres d'observation occultable (26, 26') doit être occultée avec un volet, la deuxième tête de mesure (20') présente un multiplexeur optique (24'), les multiplexeurs optiques (24, 24') des têtes de mesure (20, 20') reçoivent en outre, du côté de l'entrée, des signaux des sorties optiques de leurs unités de communication de données et le spectromètre (10) est associé sur une entrée optique (13) à un démultiplexeur optique (15) qui est connecté au spectroscope (11) du spectromètre (10) et à l'unité de communication de données (12) du spectromètre (10) pour distribuer des signaux entrants aussi bien à l'unité de communication de données (12) qu'au spectroscope (11), et la commande de processus (16) n'ouvre qu'une fenêtre d'observation (26, 26') à la fois dans les têtes de mesure (20, 20') à un moment défini, les signaux neutres des têtes de mesure (20, 20') dont la fenêtre d'observation (26, 26') n'est pas occultée étant soustraits au niveau du spectromètre (10).

2. Dispositif de mesure selon la revendication 1, **caractérisé en ce que** le spectromètre (10) est associé du côté de l'entrée à un multiplexeur optique (14) muni de plusieurs entrées (13), qui permet la connexion directe en parallèle de plusieurs têtes de mesure (20, 20') au spectromètre (10).

3. Dispositif de mesure selon la revendication 2, **caractérisé en ce que** le spectromètre (10) est associé dans une même unité de construction à une tête de mesure supplémentaire, qui est connectée à l'une des entrées du multiplexeur optique (14) du spectromètre (10).

4. Dispositif de mesure selon la revendication 3, **caractérisé en ce que** seules les entrées du multiplexeur (14) du spectromètre (10) qui sont connectées à des têtes de mesure (20, 20') disposées à distance sont connectées par l'intermédiaire du démultiplexeur (15) du spectromètre (10) à l'unité de communication de données (12) du spectromètre (10) et au spectroscope (11), tandis que l'entrée du multiplexeur (14) du spectromètre (10) qui est connecté à la tête de mesure associée au spectromètre (10) dans la même unité de construction est connectée seulement au spectroscope (11).
